# DEMANDE DE BREVET EUROPEEN

(11) **EP 2 325 710 A1**
(43) Date de publication de la demande: **25.05.2011**
(21) Numéro de dépôt: 09172989.7
(22) Date de dépôt: 14.10.2009
(51) Int. Cl.: G05B 19/404

(54) **Procédé et système de compenser les variations dimensionnelles dans une machine d'usinage**

(71) Demandeur: Tornos SA, 2740 Moutier (CH)
(72) Inventeur: La désignation de l'inventeur n'a pas encore été déposée
(74) Mandataire: Vesterinen, Jussi Tapio

(57) **Abrégé**

La présente invention se rapporte à un procédé pour compenser les variations dimensionnelles dans une machine d'usinage multibroches dues, par exemple, à des effets thermiques telles qu'une dilatation de chauffage ou une contraction de refroidissement, ou d'usure d'outil. Le procédé comprend la détermination, par mesure répétitive, de la position d'une partie de la machine d'usinage multibroches (par exemple la périphérie du barillet (107')) relative à une référence prédéterminée (115). Cette mesure peut être réalisée à l'aide d'un palpeur (113) à contact ou a proximité. Dans une variante du procédé, la position relative d'un deuxième élément (105') de la machine d'usinage multibroches (par exemple une arête d'outil) est mesurée répétitivement par rapport à la même référence (115). De cette manière, les variations dimensionnelles du barillet (107') (par rapport à la référence et/ou à l'arête de l'outil) pourront être utilisées pour calculer les paramètres de compensations d'erreur pour l'usinage.

## Description

La présente invention se rapporte au domaine technique général des machines d'usinage, et plus particulièrement de la détection et compensation des variations dimensionnelles dans une machine d'usinage. De telles variations étant dues, par exemple, à des effets thermiques et/ou d'usure pendant l'usinage d'une série de pièces.

L'invention concerne plus précisément un procédé et une machine d'usinage qui permettent de détecter et compenser des variations dimensionnelles. L'invention permet de compenser les variations dues aux effets thermiques ou d'usure d'outil, ou à tout effet qui peut influencer les dimensions d'un ou plusieurs éléments de la machine d'usinage pendant l'usinage. La détection ou mesure de ces variations permet à la machine d'usinage de compenser automatiquement les variations pendant l'usinage.

Par le terme machine d'usinage on comprend, par exemple, les machines à meulage, tournage, fraisage et décolletage.

Au niveau de chaque poste d'usinage, une telle machine d'usinage comprend un outil d'usinage ou un groupe d'outils d'usinage, supporté par une table mobile, et un organe moteur pour déplacer la table et ainsi le ou les outils.

Les organes moteurs de la machine d'usinage sont commandés par un dispositif de commande qui exploite un plan de commande préétabli, c'est-à-dire élaboré préalablement à l'usinage, et ce, en fonction des caractéristiques de profil de la pièce ou des pièces à réaliser.

La machine d'usinage comprend un dispositif de commande qui exploite un plan de commande qui a été préalablement construit et sous l'influence duquel est capable de réaliser au moins une opération d'usinage et, classiquement, une pluralité d'opérations d'usinage.

La construction du plan de commande est effectuée par inscription sur un support de mémorisation, d'informations qui constituent des instructions utilisables par le dispositif de commande pour commander au moins un organe moteur approprié.

Il s'avère que certains des éléments d'une machine d'usinage sont susceptibles de requérir au moins une correction de position afin de maintenir la précision d'usinage des pièces étant usinées. Par exemple, cette correction de position est nécessaire due à une usure de l'outil ou à une dilatation thermique d'un ou plusieurs éléments de la chaine mécanique qui sépare la pièce de l'outil d'usinage.

Avantageusement, le dispositif de commande comprend une fonctionnalité qui permet de corriger le contenu d'un ensemble d'instructions définissant une opération d'usinage, plus particulièrement mais non exclusivement de manière à tenir compte d'une usure d'outil ou d'une variation de température qui affecte la position de cet outil relatif à chaque pièce usinée.

On connait (voir EP1559505, du même demandeur) un procédé pour détecter et calculer un écart de position d'un outil dans une machine d'usinage. Dans ce document, une position effective (réelle) relative à une position de référence est mesurée en terme du temps de trajet depuis une position de référence (position de départ), et comparée à une position théorique (souhaitée) prédéterminée. Le procédé de EP1559505 utilise des moyens de détecter le point de contact à la pièce étant usinée, plus particulièrement un contacteur qui est actionné lorsque l'outil vient en contact avec la surface de la pièce étant usinée. L'écart de position est mesuré et exprimé en terme du temps de trajet de l'outil (ou du palpeur) depuis un point de référence et le point de contact entre l'outil et la pièce étant usinée.

Un inconvénient de ce procédé est la nécessité de palper la surface de la pièce étant usinée à un endroit qui n'est pas, par définition, prévisible, ce qui apporte un risque d'abîmer la surface de la pièce.

En outre, le système de EP1559505 utilise l'outil même, ou un palpeur, pour détecter la surface de la pièce, ce qui a pour conséquence que la mesure ne peut être faite que pendant que la pièce soit en position d'être usinée et, dans le cas où un palpeur est utilisé, que la pièce soit stationnaire (pour que la touche du palpeur et/ou la pièce ne soit pas abîmée ou usée). Toute mesure doit être prise pendant le temps où d'autres actions sont effectuées par la machine d'usinage (tels que l'usinage même, l'indexage des pièces etc.) pourraient être accomplis. Chaque mesure apporte ainsi une prolongation du temps nécessaire pour l'usinage.

Un résultat que l'invention vise à obtenir est de proposer une solution pour une machine d'usinage multibroches qui permet de mesurer et compenser des variations dimensionnelles/positionnelles dans la machine d'usinage comme expliqué plus en détail plus loin.

L'utilisation de ce procédé aux machines d'usinage multibroches, a pour objet de compenser les variations dimensionnelles dans la machine, telles que les variations thermiques ou dues à l'usure des outils. Dans ce texte, on utilise le terme « variations thermiques » pour signifier des variations dimensionnelles, telles que dilatations ou contractions, dues à des changements de température.

Un autre résultat qu'au moins un mode de réalisation de l'invention vise à obtenir est donc un procédé et une machine d'usinage multibroches pour détecter les variations dimensionnelles dans la machine, sans augmenter sensiblement le temps ce cycle d'usinage.

Un autre résultat qu'au moins un mode de réalisation de l'invention vise à obtenir est un procédé et une machine d'usinage multibroches qui permettent la détermination des variations dimensionnelles dans une machine d'usinage multibroches, en évitant la possibilité d'abîmer les surfaces des pièces étant usinées.

Un autre résultat qu'au moins un mode de réalisation de l'invention vise à obtenir est un procédé et une machine d'usinage multibroches qui permettent la détermination des variations dimensionnelles dans une machine d'usinage multibroche, en permettant de compenser les variations dimensionnelles même quand les pièces à usiner sont d'une forme complexe.

Un autre résultat qu'au moins un mode de réalisation de l'invention vise à obtenir est un procédé et une machine d'usinage multibroches qui permettent de gagner du temps d'usinage et de réduire des pertes de productivité en évitant une phase de mise en chauffe pendant que les variations dimensionnelles de dilatation thermique se stabilisent.

Un autre résultat qu'au moins un mode de réalisation de l'invention vise à obtenir est un procédé et une machine d'usinage multibroches qui permettent la détermination des variations dimensionnelles dans une machine d'usinage multibroches, les moyens de réalisation du procédé étant disposés sans encombrement des autres éléments de la machine d'usinage multibroches.

Un autre résultat qu'au moins un mode de réalisation de l'invention vise à obtenir est un procédé et une machine d'usinage multibroches qui permettent la détermination des variations dimensionnelles dans une machine d'usinage multibroches, le procédé étant au moins partiellement effectué par l'unité de commande numérique de la machine-outil, mais avec un minimum d'encombrement de mémoire de l'unité de commande numérique.

Un autre résultat qu'au moins un mode de réalisation de l'invention vise à obtenir est un procédé et une machine d'usinage multibroches qui permettent la mesure des variations thermiques dans une machine d'usinage multibroches pendant l'usinage.

Un autre résultat qu'au moins un mode de réalisation de l'invention vise à obtenir est un procédé et une machine d'usinage multibroches qui permettent la mesure des variations thermiques et/ou d'usure dans une machine d'usinage multibroches, sans encombrer les trajectoires des outils.

A cet effet, l'invention a pour objet selon un premier aspect un procédé pour compenser des variations dimensionnelles dans une machine d'usinage multibroches, la machine comprenant au moins un premier élément susceptible à des variations dimensionnelles pendant l'usinage d'une série de pièces, le procédé comprenant les étapes de :
pour au moins un cycle d'une série de cycles, une première étape de déterminer une première position relative d'une première partie prédéterminée dudit premier élément par rapport à une référence,
pour au moins une des premières positions relatives déterminées dans la première étape, une seconde étape de déterminer, par comparaison entre ladite au moins une première position relative et au moins une première position relative déterminée préalablement, une première variation de la position dudit premier élément par rapport à ladite référence,
une troisième étape de, pour au moins une des premières variations déterminées dans la seconde étape, calculer des paramètres d'ajustement à l'usinage selon une fonction prédéterminée, la fonction prédéterminée étant une fonction de ladite première variation de la position dudit premier élément.

Avantageusement le procédé fonctionne en relatif, c'est-à-dire que l'on estime la variation de la position par rapport de sa valeur antérieure. Il est aussi possible d'éliminer les mesures aberrantes et ceci améliore la fiabilité de cette méthode. Un autre avantage de la présente méthode est que l'on peut mesurer les variations des positions même si les pièces à usiner sont d'une forme complexe.

L'invention a pour objet selon un deuxième aspect une machine d'usinage multibroches pour compenser des variations dimensionnelles, la machine comprenant au moins un premier élément susceptible à des variations dimensionnelles pendant l'usinage d'une série de pièces,
la machine comprenant :
un premier moyen de déterminer, pour au moins un cycle d'une série de cycles, une première position relative d'une première partie prédéterminée dudit premier élément par rapport à une référence,
un deuxième moyen de déterminer, pour au moins une des premières positions relatives déterminées par le premier moyen, et par comparaison entre ladite au moins une première position relative et au moins une première position relative déterminée préalablement, une première variation de la position dudit premier élément par rapport à ladite référence,
un troisième moyen de calculer, pour au moins une des premières variations déterminées par le deuxième moyen, des paramètres d'ajustement à l'usinage selon une fonction prédéterminée, la fonction prédéterminée étant une fonction de ladite première variation de la position dudit premier élément.

Les autres aspects de la présente invention se trouvent dans les revendications dépendantes.

L'invention sera bien comprise à la lecture de la description ci-après faite à titre d'exemple non limitatif en regardant les dessins ci-annexés qui représentent schématiquement :
- figure 1 : sous forme de blocs fonctionnels, une partie d'une machine d'usinage multibroches mettant en oeuvre le procédé selon un premier mode de réalisation de la présente invention, et
- figure 2 : sous forme de blocs fonctionnels, une partie d'une machine d'usinage multibroches mettant en oeuvre le procédé selon un autre mode de réalisation de la présente invention.

En se reportant aux dessins, quelques modes de réalisation non limitatifs d'une machine d'usinage conformément à la présente invention sont maintenant expliqués plus en détail. Dans le cadre de la description ci-dessous, les variations dimensionnelles incluent les écarts de positionnement.

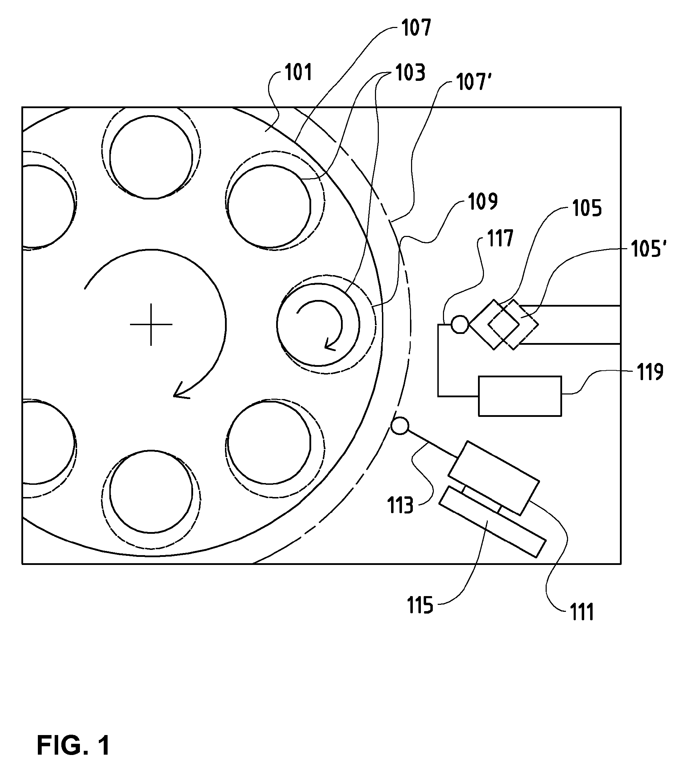

En se reportant à la figure 1, on voit sur une vue partielle et schématique une machine d'usinage multibroches qui permet la réalisation d'un procédé selon le premier mode de réalisation de la présente invention. La machine d'usinage multibroches est munie d'un barillet 101 avec plusieurs portes-pièces, ou broches 103, rotatives. La machine d'usinage multibroches de l'exemple représenté comprend dans ce cas huit broches 103. Le barillet 101 est indexé (tourné) en rotation, sous commande d'une unité de commande (non représentée), autour de son propre axe afin de rendre chacune des broches 103 à des positions prédéterminées d'usinage. Chaque broche 103 tourne autour de son propre axe sous commande de l'unité de commande pour permettre un usinage par un ou plusieurs outils 105.

Par le terme machine d'usinage multibroches on comprend une machine-outil comprenant une pluralité des broches supportées par un barillet. La machine-outil multibroches sera capable de travailler simultanément plusieurs barres et dans lesquelles les pièces usinées vont subir successivement l'action automatique de plusieurs outils sur chacun des postes d'usinage disposés en cercle autour du barillet.

Au cours de l'usinage, par exemple, d'une série de pièces, le diamètre du barillet 101 est susceptible à des variations thermiques (par exemple une dilatation) dues aux changements de température engendrés pendant l'usinage. Le pourtour ainsi étendu du barillet 101 est représenté par la référence 107'.

Le diamètre de chaque broche 103, et/ou des pièces (non représentées montées sur les broches 103, peut être également susceptible à des telles variations thermiques. L'écart de position de la circonférence de chaque broche en conséquence de la dilatation du barillet et de la broche même est représenté par la référence 109.

De même, chaque outil 105 est susceptible d'une usure (ainsi éventuellement que des variations thermiques) pendant l'usinage. Sur les figures, l'outil usé est représenté par une ligne pointillée et par la référence 105'.

Ces variations thermiques et/ou d'usure ont pour conséquence une variation de la position inacceptable des pièces ainsi usinées et/ou de l'outil même, à moins que les variations soient compensées. Une telle compensation est néanmoins seulement possible dès qu'on puisse mesurer les variations à compenser.

Vu qu'une grande partie de ces variations dans les pièces usinées est due aux variations thermiques et/ou d'usure d'outil dans la machine d'usinage multibroches, il est proposé de mesurer ces variations thermiques et/ou d'usure. Muni de ces informations, le logiciel de l'unité de commande peut déduire les variations dimensionnelles des pièces, et adapter l'usinage automatiquement pour les compenser.

La figure 1 représente deux exemples des réalisations du principe de l'invention dans une machine d'usinage multibroches. Dans le premier exemple, un capteur 111, dans cet exemple un palpeur, est utilisé pour palper la position du périmètre 107' du barillet 101 relatif à une position de référence (position de repos du capteur 111, par exemple. Dans ce cas, la touche 113 du capteur 111 est déplacée selon une trajectoire prédéterminée (linéairement dans le cas illustré) par un organe de déplacement 115. De cette manière, la touche 113 avance vers la cible (surface 107' du barillet 101) avant d'être retirée vers sa position originale, c'est-à-dire sa position de repos. Ce palpage peut se dérouler pendant la rotation du barillet 101 (pendant l'indexage), ou pendant l'usinage, quand le barillet est normalement stationnaire.

Dans une machine d'usinage multibroches, par exemple, les variations thermiques du barillet sont de l'ordre de quelques centièmes d'un millimètre, et nécessite un palpeur ayant une touche qui peut palper la surface du barillet 101 à une fréquence qui convient à l'usinage. Un palpeur 111 tel qu'il est représenté à titre d'exemple sur la figure 1 est muni d'une touche 113 capable de déplacement selon une trajectoire courte, par exemple d'un ou deux millimètres seulement, la trajectoire étant essentiellement linéaire dans cet exemple.

Dans un deuxième exemple d'un palpage représenté sur la figure 1, un déplacement relatif est entraîné entre la touche 117 d'un deuxième capteur 119 et la pointe d'un outil 105. Comme l'outil 105 est de toute façon déplaçable sous contrôle d'une unité de commande, le capteur 119 peut avantageusement être stationnaire, le palpage étant accompli par le déplacement de l'outil 105 selon une trajectoire programmée dans l'unité de commande. Ce deuxième palpage peut se dérouler « en temps mort », c'est-à-dire pendant l'indexage du barillet 101, quand l'usinage est de toute façon interrompu. La touche 117 du deuxième capteur 119 est d'une telle forme que l'outil puisse l'accéder facilement et rapidement pendant le temps mort, avec une haute répétabilité (c'est-à-dire sans variation importante de la trajectoire et la vitesse de son déplacement). Cet ensemble constitue un système de base permettant de contrôler les variations des diamètres usinés par l'outil en question.

En ce qui concerne les palpeurs 111 ; 119, on peut envisager des différentes configurations pour les loger dans le système. On dispose les palpeurs 111 ; 119 dans un endroit où la place est disponible. Avantageusement les touches 113 ; 117 sont disposées près de l'objet à palper (le barillet, par exemple), ou à un endroit où elles sont accessibles pour être palpées par un outil (l'outil étant déplacé vers la touche du palpeur sous commande de l'unité de commande de la machine-outil). Avantageusement, le palpeur 111 est prévu dans un endroit de la machine d'usinage multibroches à côté de la périphérie du barillet 101 et éloigné des opérations d'usinage et/ou des trajectoires d'outil 105 ou de pièce.

Dans une machine-outil, par exemple, le palpeur 111 peut être déplacé vers la surface (barillet 101) du support de fixation de la pièce à usiner. Ou, dans le cas où la cible est l'arête d'un outil 105, c'est soit l'outil 105 qui serait déplacé, sous commande de l'unité de commande numérique de la machine, vers le palpeur 119, soit le palpeur 119 qui serait déplacé vers l'outil 105.

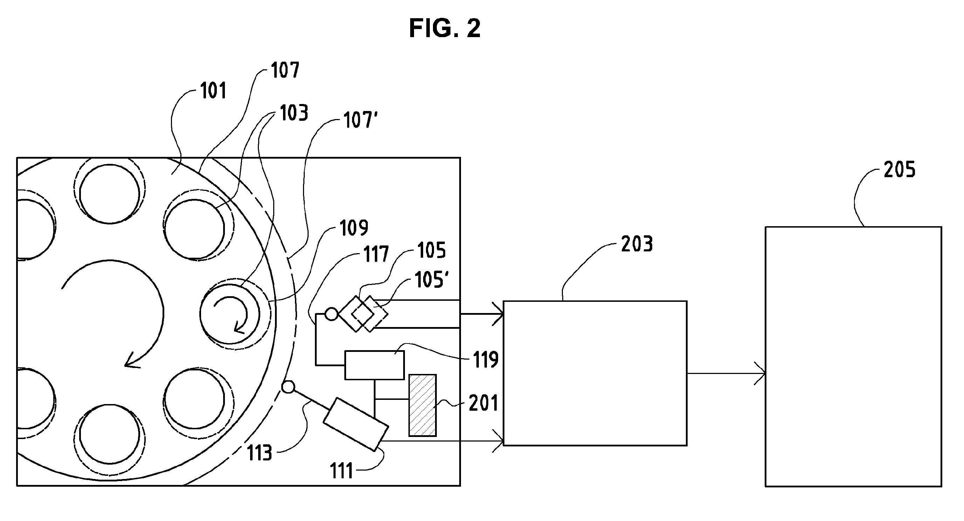

Un autre mode de réalisation de la présente invention est décrit en se référant à la figure 2. Sur la figure 2, on voit un assemblage de palpage qui comprend les deux palpeurs 111 ; 119 et un bâti 201 qui sert en tant que référence pour les deux palpeurs 111 ; 119. Sur la figure 2 on voit également nouveaux éléments, notamment un boitier électronique 203 et l'unité de commende numérique 205 dont les fonctionnements sont expliqués plus en détail plus tard.

La configuration de la figure 2 est capable d'effectuer un palpage unifié qui tient compte des résultats de deux palpeurs 111 ; 119. Dans l'application à une machine d'usinage multibroches, dans cet exemple une série de cycles de palpage est exécutée, à une fréquence liée avantageusement à la fréquence des cycles d'usinages. De cette manière, une série de mesures est générée pendant l'usinage, chaque mesure étant comparée à une mesure de référence. Dans le cas plus simple il est possible de prendre la mesure précédente comme mesure de référence. Il est aussi possible de calculer une valeur de référence depuis un jeu de mesures précédentes (par exemple en une fonction de moyenne).

Dans cet exemple non limitatif, pour au moins un cycle d'une série de cycles, dans la première étape le palpeur 111 mesure une position relative du pourtour 107' du barillet 101 par rapport au bâti 201 qui sert en tant que référence. Dans la seconde étape on compare la position relative du pourtour 107' du barillet 101 et au moins une position relative du pourtour du barillet 101 déterminée préalablement (qui peut être par exemple une position précédente) pour obtenir une variation de la position du pourtour du barillet 101 par rapport au bâti 201. Dans la troisième étape, pour au moins une des variations déterminées dans la seconde étape, on calcule des paramètres d'ajustement à l'usinage selon une fonction prédéterminée, qui est donc une fonction de la variation de la position du pourtour du barillet 101.

Pour le palpeur 119 on effectue des étapes correspondantes, mais pour palper l'outil 105'. Pour au moins un cycle d'une pluralité de cycles dans ladite série de cycles, dans la quatrième étape on détermine une position relative de l'outil 105' par rapport au bâti 201. Dans la quatrième étape on compare la position relative de l'outil 105' et au moins une des positions relatives de l'outil déterminées préalablement pour obtenir une variation de la position de l'outil 105' par rapport au bâti 201. Dans la sixième étape, pour au moins une des variations déterminées dans la cinquième étape, on calcule des paramètres d'ajustement à l'usinage selon une fonction prédéterminée, qui est donc une fonction de la variation de la position de l'outil 105'.

Les signaux issus des palpeurs 111 ; 119 sont centralisés par le boitier électronique 203. Ensuite les données sont envoyées à la commande numérique 205 qui détermine les variations des positions et qui contrôle l'ajustement à l'usinage. La valeur obtenue pour l'ajustement à l'usinage est une valeur qui est donc liée à la distance relative des deux palpeurs 111 ; 119, et ne dépend donc plus de la position de la référence commune (bâti 201).

Une optimisation de ces données et aussi proposée, en détectant les données aberrantes ou moins pertinentes. Ce filtrage de données peut être réalisé dans l'unité de commande 205 d'une machine d'usinage multibroches, qui peut exécuter des algorithmes pour sélectionner les données historiques les plus pertinents pour calculer la valeur moyenne, par exemple. Cette sélection peut éliminer les mesures les plus anciennes, par exemple, ou des mesures manquantes, ou des mesures à valeurs hors d'une certaine plage prédéterminée, selon les besoins de l'usinage particulier. Un arrêt de la machine d'usinage multibroches, et son redémarrage subséquent, peut occasionner un saut soudain apparent dans la série de valeurs mesurées, dû à un refroidissement des organes de la machine-outil. Dans un tel cas, le filtrage des données devrait être capable de recommencer le calcul de référence avec les nouvelles valeurs, en ignorant les mesures avant la pause. Autrement, le filtrage pourrait introduire un facteur d'écart pour supprimer le saut.

A chaque cycle de palpage, un ou plusieurs coefficients de correction peuvent être calculés depuis la valeur mesurée et la ou les valeurs de référence.

Dans certaines machines d'usinage multibroches, il est préférable de réduire l'emplacement de mémoire utilisé. Ainsi on effectue le traitement des données avec facteur d'oubli, c'est-à-dire qui affecte à une valeur un poids en fonction de son ancienneté. Par exemple, les valeurs récentes ont un poids plus important que les valeurs anciennes. On pourrait aussi envisager une solution dans laquelle les valeurs plus anciennes que N (N étant un entier positif) sont oubliées.

Au démarrage, le système doit déterminer la valeur de référence. La première mesure peut être prise comme la valeur de référence. Il subsiste cependant un risque important que la première mesure soit aberrante ; dans ce cas le système considérerait la première mesure comme bonne et toutes les autres comme mauvaises. Une phase de pré-filtrage, tenant compte de plusieurs premières mesures (ajustées, si nécessaire, à une série de mesures précédentes) permet de déterminer une valeur de référence non-aberrante.

Les mesures expliquées pour détecter les valeurs aberrantes permettent d'obtenir une solution dans laquelle une calibration n'est pas nécessaire. Les valeurs absolues des distances ou positions n'ont pas d'importance pour le principe de l'invention, car on cherche à déterminer une variation de cette distance. Toutes sortes de moyens de détection peuvent être utilisées, tant qu'ils sont capables de signaler une condition de proximité entre le palpeur et la cible, en leur permettant un déplacement relatif, l'un vers l'autre.

Egalement, l'invention concerne un logiciel pour la mise en oeuvre du procédé, et un support de stockage sur lequel est enregistré le logiciel comprenant les étapes du procédé.

## Revendications

1. Procédé de compensation des variations dimensionnelles dans une machine d'usinage multibroches, la machine comprenant au moins un premier élément (105' ; 107') susceptible à des variations dimensionnelles pendant l'usinage d'une série de pièces, le procédé comprenant les étapes de :
pour au moins un cycle d'une série de cycles, une première étape de déterminer une première position relative d'une première partie prédéterminée dudit premier élément (105' ; 107') par rapport à une référence (115 ; 201),
pour au moins une des premières positions relatives déterminées dans la première étape, une seconde étape de déterminer, par comparaison entre ladite au moins une première position relative et au moins une première position relative déterminée préalablement, une première variation de la position dudit premier élément (105' ; 107') par rapport à ladite référence (115 ; 201),
une troisième étape de, pour au moins une des premières variations déterminées dans la seconde étape, calculer des paramètres d'ajustement à l'usinage selon une fonction prédéterminée, la fonction prédéterminée étant une fonction de ladite première variation de la position dudit premier élément (105' ; 107').

2. Procédé selon la revendication 1, la machine d'usinage multibroches comprenant un second élément (105' ; 107') susceptible à des variations dimensionnelles pendant l'usinage de ladite série de pièces, le procédé comprenant les étapes de :
pour au moins un cycle d'une pluralité de cycles dans ladite série de cycles, une quatrième étape de déterminer une seconde position relative d'une seconde partie prédéterminée dudit second élément (105' ; 107') par rapport à ladite référence (115; 121),
pour au moins une des secondes positions relatives déterminées dans la quatrième étape, une cinquième étape de déterminer, par comparaison entre ladite au moins une seconde position relative et au moins une des secondes positions relatives déterminées préalablement, une seconde variation de la position dudit second élément (105' ; 107') par rapport à ladite référence (115 ; 121), et
ladite fonction prédéterminée étant une fonction de ladite seconde variation de la position dudit second élément (105' ; 107').

3. Procédé selon l'une quelconque des revendications précédentes, dans lequel le premier élément (105' ; 107') ou le second élément (105' ; 107') de la machine d'usinage multibroches est un outil (105').

4. Procédé selon la revendication 3, dans lequel ledit usinage de la série de pièces comprend des périodes de temps mort entre des processus d'usinage, et dans lequel les positions relatives de l'outil sont déterminées pendant lesdits périodes de temps mort.

5. Procédé selon l'une quelconque des revendications précédentes, dans lequel la machine d'usinage multibroches comprend une pluralité des broches (103) supportées par un barillet (101), et dans lequel le premier élément ou le second élément de la machine à usinage est un pourtour du barillet (101).

6. Procédé selon la revendication 5, dans lequel les positions relatives du pourtour du barillet (101) sont déterminées pendant l'usinage de la série de pièces.

7. Procédé selon l'une quelconque des revendications précédentes, dans lequel la référence est un bâti (201) de la machine d'usinage multibroches.

8. Procédé selon l'une quelconque des revendications 5 à 7, dans lequel ladite troisième étape est effectuée pour chaque broche (103) indépendamment, et dans lequel lesdits paramètres d'ajustement sont calculés pour chaque broche (103) indépendamment.

9. Procédé selon l'une quelconque des revendications précédentes, dans lequel les étapes de déterminer les premières et/ou secondes positions relatives sont réalisées en utilisant au moins un dispositif de palpage (111 ; 119).

10. Procédé selon la revendication 9, dans lequel le dispositif de palpage (111 ; 119) est entraîné en déplacement vers l'élément (105' ; 107') dont la position relative est en train d'être déterminée, ledit déplacement étant selon une trajectoire prédéterminée.

11. Procédé selon la revendication 9, dans lequel l'élément (107') dont la position relative est en train d'être déterminée est entraîné en déplacement vers le dispositif de palpage (119), ledit déplacement étant selon une trajectoire prédéterminée.

12. Procédé selon l'une quelconque des revendications précédentes, ladite seconde et/ou ladite quatrième étape comprenant une comparaison avec une pluralité de variations préalables, les variations préalables étant pondérées en fonction de leurs respectives anciennetés.

13. Procédé selon la revendication 12, dans lequel les variations préalables récentes ont un poids plus important que les variations plus anciennes.

14. Machine d'usinage multibroches comprenant au moins un premier élément (105' ; 107') susceptible à des variations dimensionnelles pendant l'usinage d'une série de pièces,
la machine comprenant :
un premier moyen (111 ; 119) de déterminer, pour au moins un cycle d'une série de cycles, une première position relative d'une première partie prédéterminée dudit premier élément par rapport à une référence (201),
un deuxième moyen (205) de déterminer, pour au moins une des premières positions relatives déterminées par le premier moyen, et par comparaison entre ladite au moins une première position relative et au moins une première position relative déterminée préalablement, une première variation de la position dudit premier élément (105' ; 107') par rapport à ladite référence (201),
un troisième moyen (205) de calculer, pour au moins une des premières variations déterminées par le deuxième moyen (205), des paramètres d'ajustement à l'usinage selon une fonction prédéterminée, la fonction prédéterminée étant une fonction de ladite première variation de la position dudit premier élément (105' ; 107').

15. Machine d'usinage multibroches selon la revendication 14, comprenant un second élément (105' ; 107') susceptible à des variations dimensionnelles pendant l'usinage de ladite série de pièces, la machine comprenant :
un quatrième moyen (111 ; 119) de déterminer, pour au moins un cycle d'une pluralité de cycles dans ladite série de cycles, une seconde position relative d'une seconde partie prédéterminée dudit second élément (105' ; 107') par rapport à ladite référence (201),
un cinquième moyen (205) de déterminer, pour au moins une seconde position d'une pluralité des secondes positions relatives déterminées par le quatrième moyen (111 ; 119), et par comparaison entre ladite au moins une seconde position relative et au moins une des secondes positions relatives déterminées préalablement, une seconde variation de la position dudit second élément (105' ; 107') par rapport à ladite référence (201),
ladite fonction prédéterminée étant une fonction de ladite seconde variation de la position dudit second élément (105' ; 107').
